# EUROPEAN PATENT APPLICATION

(11) **EP 2 787 777 A1**
(43) Date of publication of application: **08.10.2014**
(21) Application number: 13305434.6
(22) Date of filing: 03.04.2013
(51) Int. Cl.: H04W 52/02, H04W 28/08, H04W 84/04

(54) **Energy Saving management in heterogeneous mobile communication systems using switching ON/OFF of small cells**

(71) Applicant: ALCATEL LUCENT, 92100 Boulogne-Billancourt (FR)
(72) Inventor: Wilhelm, Michael, 70435 Stuttgart (DE); Ambrosy, Anton, 70435 Stuttgart (DE)
(74) Representative: 2SPL Patentanwälte PartG mbB

(57) **Abstract**

Embodiments provide apparatuses, methods, and computer programs for a mobile communication system. An apparatus (10) for a network node (100) for a mobile communication system (300), which comprises at least one cell (210) having a coverage area which at least partly surrounds one or more other cells (220), comprises a data module (12) operable to determine information related to a load of the cell (210) or the one or more other cells (220). The network node apparatus (10) further comprises a control module (14) operable to control a state of at least one of the one or more other cells (220) based on the information related to the load, wherein the state corresponds to an active state or an inactive state. An apparatus (20) for a cell (200) for the mobile communication system (300) comprises a load module (22) operable to determine information related to a load of the cell (200) and a communication module (24) operable to provide the information related to the load of the cell (200) to a network node (100).

## Description

Embodiments relate to wireless mobile communications, more particularly but not exclusively to resource management in heterogeneous mobile communication systems.

### Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing.

An increasing data load demands for a wide network coverage, however, it also leads to increasing energy requirements. At the same time network structures becomes more and more heterogeneous, i.e. Heterogeneous Networks (Het Net) are introduced, which operate cells of different sizes. For example, introduction of small cells into a coverage area of larger cells or macro cells can enhance the network capacity at the price of the additional energy consumption of the small cells.

### Summary

Embodiments are based on the finding that some cells, such as small cells, are typically always switched on independent of daily data traffic variations. It is another finding that energy efficient mechanisms may take advantage of low and high traffic load situations in a network. For example, it is a finding that e.g. during night time when traffic is low small cells can be switched off. Embodiments are based on the finding that intelligent decisions on switching on a certain number of small cells to carry high traffic demand can provide a more energy efficient operation of a network. That is to say, embodiments may provide an advanced concept for switching cells on and off allowing to reduce OPerational EXpenditures (OPEX) of the network or system. In some embodiments standardized messages may be used for switching on or off of cells, such standards are, for example, provided by the 3^{rd} Generation Partnership Project (3GPP).

It is another finding that algorithms for an energy efficient switching on and off of cells located in the geographical area of surrounding cells as function of the observed or expected traffic load can be utilized in embodiments. Input parameter for such algorithms or concepts can be a system throughput or an averaged macro resource usage for a given period of time and possibly measured averaged resource usages of cells within the coverage area of, for example, a surrounding macro base station or macro cell. These measures may be exchanged in a decentralized manner between macro base stations and other cells of a mobile access network to decide on the number of other cells to be switched on or off as well as the correct timing for switching on or off of other cells, such as e.g. small cells. It is yet another finding that in such embodiments a decentralized approach or a centralized approach can be used. In case of the centralized approach these measures can be transmitted to a central network node, such as an Operation, Administration and Management (OAM) center of a radio access network. Then decisions can be taken for switching on or off at the central network node.

Embodiments provide an apparatus for a network node for a mobile communication system. In other words, the apparatus may be adapted to or operable in a network node; it may be operated or comprised in a network node. The apparatus is therefore also referred to as network node apparatus. Embodiments also provide a network node comprising such a network node apparatus. The network node may correspond to any network node, such as an OAM, a base station transceiver, a switch, a router, a gateway, a node in the cloud etc.

The network node apparatus may hence be part of a mobile communication system. The mobile communication system may, for example, correspond to one of the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller that a micro cell. A base station transceiver can be a wireless interface of a wired network, which enables transmission and reception of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may thus be cellular. The term cell refers to a coverage area of radio services provided by a transmission point, a remote unit, a remote head, a remote radio head, a base station transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. A mobile transceiver can be registered or associated with at least one cell, i.e. it can be associated to a cell such that data can be exchanged between the network and the mobile in the coverage area of the associated cell using a dedicated channel, link or connection.

The mobile communication system comprises at least one cell having a coverage area which at least partly surrounds one or more other cells. The cell may also be referred to as a "first cell" and the other cell may also be referred to as a "second cell", where the second cell is equal or smaller than the first cell. Furthermore, the network node apparatus comprises a data module operable to determine information related to a load of the cell or the one or more other cells. The data module may be implemented as means for determining, a data device or a data unit. In some embodiments the data module may even be implemented in software being executed on accordingly adapted hardware, such as a processor, a Digital Signal Processor (DSP), a multi-purpose processor, etc.

The apparatus further comprises a control module operable to control a state of at least one of the one or more other cells based on the information related to the load, wherein the state corresponds to an active state or an inactive state. The control module may be implemented as means for controlling, a control device or a control unit. In some embodiments the control module may even be implemented in software being executed on accordingly adapted hardware, such as a processor, a Digital Signal Processor (DSP), a multi-purpose processor, etc.

In some embodiments, the network node apparatus can, for example, be implemented as one or more processors or microchips. The network node apparatus can be comprised as part of the network node, or it can be linked to the network node by any wireless or wire-bound connection. The network node can be operable to transmit and receive signals. The network node can be for instance a macro cell, a macro base station transceiver, a node in the cloud, or an OAM center or communicate with these by wireless or wire-bound connection. The mobile communication system can comprise one or a plurality of cells, such as, for example, macro cells. The cell can be operable to transmit and receive signals, hence the cell may correspond to one of the above described base station transceivers. Likewise, another cell may correspond to a base station transceiver, which can be operable to transmit and receive signals, and one or a plurality of other cells may be employed in the mobile communication system.

The coverage area of the cell can be equal to or larger than the coverage area of the one or more other cells. The coverage area of the other cells may, however, be smaller than the coverage area of the cell, for example, another cell may correspond to a microcell or a pico cell. The data module is operable to determine information, i.e. information can be collected, received, measured, and/or be built by the data module. In some embodiments, the load of the cell or the one or more other cells may refer to a data load, i.e. a data throughput or, more exactly, an amount of data communicated between the respective cell and mobile transceivers associated to said cell. In other embodiments the load may refer to resources utilized by the cell, e.g. radio resource utilization. For example, in embodiment referring to an OFDM system such as LTE, the quote or rate of the utilized Physical Resource Blocks (PRBs) may be used, while the corresponding data rate may further depend on the selected modulation and coding scheme.

The control module may control an operating state of other cells of the mobile communication system. That is to say, the respective other cell can be, for example, switched on or off, it can be powered up or down, it can be instructed to assume a standby state, a sleep state, a hibernation state, a wakeup state. Hence, the control module may instruct one or more other cells to enter, for example, a hibernation mode or low energy consumption mode. The other cell may be operable to support communication upon assuming an active state, and be in-operable to support communication upon assuming an inactive state.

In other words, the network node apparatus may decide by a reported data load if specific small cells are to be activated or deactivated. Other cells, which may not contribute to bearing a data load in a given area at a given time may thus assume the inactive state, effectively reducing the amount of energy consumed to operate the mobile communication system. If data traffic increases, the network node apparatus may react by activating further other cells, providing full service of the mobile communication system to users of mobile communication devices or mobile transceivers. Embodiments may therewith reduce operating costs, while keeping the system fully functional in terms of providing full network coverage to users of mobile communication devices. In other words, power consumption of a mobile access network may be reduced by efficient on/off schemes of embodiments. Furthermore, the network capacity may be increased by embodiments and the performance of an edge user can be improved by providing higher user data throughput. Energy savings for operators may, for instance, be provided by embodiments for future mobile networks.

Additionally, or alternatively, the information related to the load of the cell or the one or more other cells can comprise information related to a power consumption of the cell or the one or more other cells. The relationship between power consumption and data load of the cell or the one or more other cells may allow data comparison, based on which the use of a further activation or deactivation of another cell can be evaluated. Generally, the information on load and power consumption may be expressed in terms of numerical data. These numerical data may be visualized or exploited by, for instance, tables or graphs. In embodiments such data comparison may enable to determine an assignment scheme which provides an optimized schedule, on when to activate or deactivate particular other cells. Additionally or alternatively, the data module may be operable to receive the information related to the load periodically, triggered by an event or based on a request from the network node. In other words, data load may be acquired on request, event-driven or periodically by the data module.

In embodiments, the control module may additionally or alternatively be operable to determine a resource usage table based on the information related to the load. A comprehensive set of data can thus be made available. With the capability of determining a resource usage table, incoming data may be used to update traffic characteristic in order to further optimize or adapt activation or de-activation decisions to the traffic situations, thus keeping the comprised information up to date. In further embodiments, the control module may be further operable to determine a decision table based on the resource usage table. The decision table may comprise information on when to set the state of the one or more other cells to the active state or the inactive state. In some embodiments, the information, which can be based on recently incoming data, may thus result in an immediate decision on the state of one or more other cells. In other words, if the current data reveal a high amount of data traffic, which can be determined using threshold detection, additional other cells can be switched on accordingly. Likewise, if energy requirements exceed a certain threshold while data traffic is very low, other cells can be instructed to switch themselves off or enter hibernation mode, for instance. By reacting to given circumstances, embodiments may save significant amounts of energy running the mobile communication network.

Some embodiments may correspond to a network node apparatus of a macro cell, a macro base station transceiver or an OAM center. This can allow different alternatives of implementations of embodiments in the mobile communication network. In one approach, there can be a multitude of network nodes, each corresponding to a cell or base station transceiver, such as, for example, a macro cell or a macro base station transceiver. Each macro cell or macro base station transceiver may receive data from other cells within its own area of network coverage and decide autonomously how and when to change the state of each respective other cell. This "decentralized" approach of some embodiments may represent a solution which may be insensitive to perturbations, e.g. a partial or a full blackout of any single network node. In another "centralized" approach the network node apparatus may be located in a single centralized node, such as the OAM center. Data from the entire system may be collected and evaluated centrally in the OAM center, which may then set up one or more decision tables and address cells, macro cells, or small cells in the entire network. For example, macro cells or macro base stations might be informed about the load of other cells. Then macro base stations may be able to send a message to affected other cells, which should be switched on or off. The decision may also be taken in the cloud, which may inform the macro base stations. This "centralized" approach used in some embodiments may prove useful to an operator of the mobile communication network, who might want to gather data centrally at one single data base, for instance for reasons of analysis, surveillance or network-wide optimization.

Embodiments further provide an apparatus for a corresponding cell of the mobile communication system. This corresponding cell may also be referred to as a "third cell", in line with the above first and second cells. In other words, the apparatus may be adapted to or operable in a cell or base station transceiver or a functional unit in a base station, which may be responsible for all associated sectors or cells; it may be operated or comprised in a cell or base station transceiver. The apparatus is therefore also referred to as cell apparatus. Embodiments also provide a cell or base station transceiver comprising such a cell apparatus. Generally, the cell may correspond to any cell of the mobile communication system, e.g. a macro cell, a small cell, a micro cell, a femto cell, a metro cell etc. In line with the above, the mobile communication system comprises the at least one first cell having a coverage area which at least partly surrounds the one or more other cells. The cell apparatus further comprises a load module operable to determine information related to a load of the cell. The load module may be implemented as means for determining, a load device or a load unit. In some embodiments the load module may even be implemented in software being executed on accordingly adapted hardware, such as a processor, a Digital Signal Processor (DSP), a multi-purpose processor, etc.

The apparatus further comprises a communication module operable to provide the information related to the load of the cell to a network node. The communication module may be implemented as means for providing, a load device or a communication unit. In some embodiments the communication module may even be implemented in software being executed on accordingly adapted hardware, such as a processor, a Digital Signal Processor (DSP), a multi-purpose processor, etc. In other words, each cell may have the capability of assessing its data load, and is further operable to make this information available to the above described network node or network node apparatus. The network node may therefore register the content of the information and where it came from.

In some embodiments, the communication module may be operable to receive instructional information related to a state of the cell. The state therein can correspond to the above-described active state or inactive state. In other words, such cells may react to instructions coming in from the network node apparatus as described above. The system may hence quickly react to changes in data throughput or resource utilization in a given area. Embodiments may make the mobile communication network adaptive to user needs and traffic characteristics.

In further embodiments the cell may correspond to any cell, e.g. a macro cell or a small cell. This may open up a wide range of configurations for the mobile communication system. In some embodiments one OAM center or the cloud may control the state of a multitude of other cells, e.g. pico cells, within its network coverage area. In other embodiments, several macro cells, macro base station transceivers, or one or more units of base station transceivers, which control the associated macro cells may each control a multitude of smaller or pico cells within their respective network coverage area. Furthermore, in other embodiments several macro cells or macro base station transceivers may control a multitude of even more macro cells situated within their respective network coverage area, just to give a few example embodiments. The size of the controlled network coverage area may hence assume a wide range of values in embodiments. This may render the mobile communication system very flexible in embodiments, as local fluctuations in data throughput or resource utilization of a wide spatial extent may be accounted for. A cell being controlled may cover a small area, e.g. a pico or femto cell covering residential area or one or more households. A cell being controlled may also cover a large area, e.g. a macro cell covering premises, a campus, or a pedestrian zone.

In embodiments, the information related to the load of the cell can comprise information related to a power consumption of the cell. As mentioned above, this may bear the advantage that individual up-to-date statistics for any single cell regarding the load of the cell as well as its power consumption can be obtained.

In further embodiments, the instructional information related to the state of the cell may be comprised in a decision table. In other words, information regarding the status of a cell to be controlled may be stored centrally by one network node (or de-centrally, if several network nodes are in operation) in a schedule. In yet further embodiments, the decision table may, additionally or alternatively, be based on a resource usage table. The resource usage table can be based on the information related to the load of the cell. In other words, a customized schedule may be set up in some embodiments using knowledge about current or statistical traffic demands of the system.

In even further embodiments, the communication module may be operable to provide the information related to the load of the cell to a network node based on, i.e. triggered by, an event, periodically, or upon a request from the network node. This may allow different options for updating information. The information related to the load of the cell may for instance be updated in key situations in which a respective event is triggered. Key situations can for instance concern rush hours, traffic hot spots, core working time or even unexpected surges or drop-offs in data traffic. Another option would be a frequent update, where the information related to the averaged load of a cell is provided periodically, for instance every second or minute, every ten minutes, every hour or every day. Knowledge on periodical fluctuations in data traffic can further offer the possibility of scheduling cells for activation or deactivation in advance. Cells covering places where high data traffic occurs, for instance between 6.00 a.m. and 6.00 p.m., may thus be scheduled for activation in the respective time span and be scheduled for deactivation outside this time span, e.g. overnight. Cells covering residential areas may experience strongest data traffic and thus be activated in the morning and evening hours.

Embodiments further provide a method for a network node for a mobile communication system. The mobile communication system comprises at least one cell having a coverage area which at least partly surrounds one or more other cells. The method comprises determining information related to a load of the cell or the one or more other cells. The method further comprises controlling a state of at least one of the one or more other cells based on the information related to the load. The state corresponds to an active state or an inactive state. In other words, the network node, e.g. the macro cell or macro base station, may decide with respect to data load at which point in time it is more efficient to have a part of the data load diverted to another cell, e.g. a micro cell or a pico cell.

Embodiments further provide a method for a cell for a mobile communication system. The mobile communication system comprises at least one cell having a coverage area which at least partly surrounds one or more other cells. The method comprises determining information related to a load of the cell. The method further comprises providing the information related to the load of the cell to a network node. Expressed in other words, this means that any one cell may yield information on a current or averaged data load, or a power consumption, based on which the same cell can be addressed by instructions from the network node.

Also, embodiments provide a computer program having a program code for performing one of the methods described above, when the computer program is executed on a computer, a processor or software-executable hardware.

Some embodiments comprise a digital control circuit installed within an apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer or a digital processor.

### Brief description of the Figures

Some embodiments of apparatuses and/or methods will be described in the following by way of example only, and with reference to the accompanying figures, in which
- Fig. 1: shows an embodiment of a network node apparatus and an embodiment of a cell apparatus for a mobile communication system;
- Fig. 2: illustrates an embodiment in a heterogeneous configuration of a mobile communication system;
- Fig. 3: displays a graphical visualization of data comprising data load in terms of system throughput and power consumption in an embodiment;
- Fig. 4: displays a graphical visualization of data comprising data load in terms of system throughput and resource usage of a macro cell in an embodiment;
- Fig. 5: displays a graphical visualization of data comprising data load and power consumption of a macro cell and a pico cell in an embodiment;
- Fig. 6: shows a detailed embodiment of a network node apparatus and an embodiment of a cell apparatus for a mobile communication system;
- Fig. 7: illustrates a block diagram of a flow chart of an embodiment of a method for a network node for a mobile communication system; and
- Fig. 8: illustrates a block diagram of a flow chart of an embodiment of a method for a cell for a mobile communication system.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

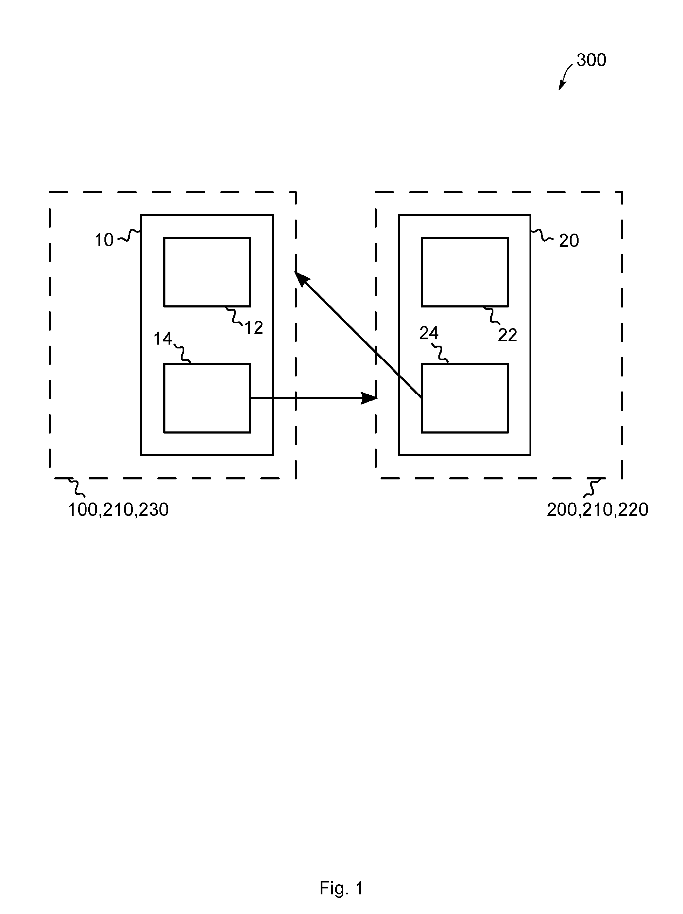

In the following figures optional features or entities are shown in dashed or dotted lines. Fig. 1 shows an embodiment of a network node apparatus 10 and an embodiment of a cell apparatus 20 for a mobile communication system 300. In the following the mobile communication system 300 is assumed to be an LTE system. In the illustration, the apparatuses 10 and 20 are comprised by a network node 100 and a cell 200, respectively; however, the apparatuses 10 and 20 can also be put into practice as external modules with respect to the network node 100 and the cell 200, respectively. The network node 100 can for instance represent a macro cell 210, a base station which may control several cells or an OAM center 230. The cell 200 can for instance represent a macro cell 210 or another cell 220, such as a small or smaller cell. The dashed boxes indicate that these modules are optional, and the arrangement of these modules with respect to other modules can in practice differ from the given example embodiment.

The mobile communication system 300 comprises at least one cell 210 or base station transceiver, which are depicted as macro cell or macro base station transceiver 210, having a coverage area which at least partly surrounds one or more other cells 220, which are depicted as pico cells 220. The apparatus 10 for the network node 100 comprises a data module 12 and a control module 14, which can be coupled to each other. An arrow pointing from the control module 14 to the cell 200 indicates that the control module 14 is operable to control a state of at least one of the one or more other cells 220 (or the cell 200, or the macro cell 210). The cell apparatus 20 comprises a load module 22 and a communication module 24, which can be coupled to each other. Another arrow pointing from the communication module 24 to the network node 100 indicates that the communication module 24 is operable to provide the information related to the load of the cell 200 to the network node 100. The data module 12 is further operable to determine information related to a load of a cell, e.g. a macro cell 210, or the one or more other cells 220. The load module 22 is further operable to determine information related to a load of the cell 200. The apparatuses 10 and 20 can for instance be implemented as a computer, a processor or any other software-executable hardware.

Embodiments may use algorithms for an energy-efficient switching on and off of cells 200 (e.g. other cells 220) located in the geographical area of network nodes 100 (e.g. macro cells 210 or macro base stations) as function of the observed or expected traffic load. Input parameter for such an algorithm can be, for example, system throughput, averaged macro resource usage or other cell resource usage for a given period of time. These measures may be exchanged between base stations of a mobile communication network 300 to decide on the number of cells 200 to be switched on or off as well as the correct timing for switching on or off of cells 200 in embodiments. If a decentralized approach is used; network nodes 100 can for instance be implemented as macro cells 210 or macro base stations. In case of a centralized approach, these measures could be transmitted for instance to the OAM center 230 of the radio access network (or the mobile communication system 300). Then decisions are taken for switching on or off at the OAM center 230.

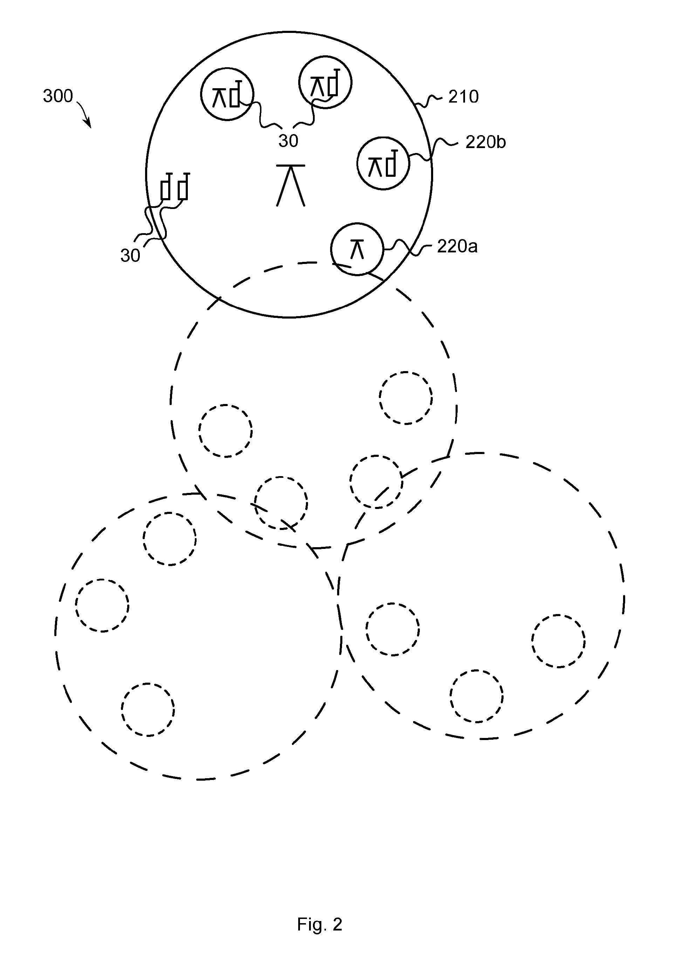

Fig. 2 shows an embodiment in a heterogeneous mobile communication network 300. A large solid circle with an antenna symbol at its center represents a cell, e.g. a macro cell 210, and the area covered by the same. Small solid circles with corresponding antenna symbols at their center represent a plurality of other cells 220a, b, etc. respectively. The other cells 220, which are assumed to be small cells, are surrounded by the large circles indicating that their network coverage area overlaps with a network coverage area of a macro cell 210. Each small cell 220a, b, etc. may be directly connected, e.g. via X2-interface, towards its macro base station. Cell phone symbols represent mobile devices or transceivers 30 of users currently present in the respective network coverage area. Note that there can be one or more small cells 220 within the network coverage area of the macro cell 210. Note further that, depending on the respective embodiment, the network node 100 may be a macro cell 210, a macro base station or an OAM center 230. Furthermore, other cells 220 can be implemented as micro cells or pico cells; however, also an implementation of cells 200 as macro cells 210 is possible. In the latter example, cells 200 implemented as macro cells 210 would be situated within the network coverage area of network nodes 100, themselves possibly being implemented as macro cells 210.

If the network node 100 is implemented as a macro cell 210 or macro base station in some embodiments (or if a decentralized approach is used), there may be a multitude of macro cells 210 engulfing one or several cells 200 (or other cells 220) within their network coverage area, visualized as large dashed circles comprising small dashed circles. In other words, embodiments using the centralized concept may comprise one network node, whereas in a decentralized approach, several independent "clusters" can operate in parallel to each other.

The network node 100 can hence correspond to a macro cell 210, a macro base station or an OAM center 230. The cell 200 on the other hand can correspond to a macro cell 210 or another cell. In the following embodiments will be described in which the cell 200 corresponds to another cell, such as cells 220a and 220b in Fig. 2.

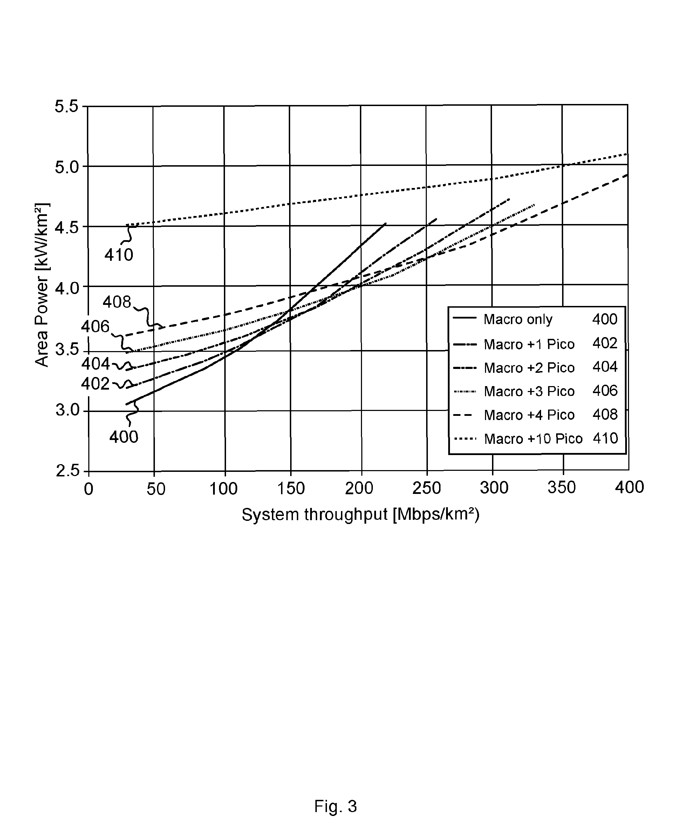

In the present embodiment the information related to the load of the macro cell 210 or the one or more small cells 220 may comprise information related to a power consumption of the macro cell 210 or the one or more other/small cells 220. Additionally or alternatively, the data module 12 may be operable to receive the information related to the load periodically, triggered by an event, or based on a request from the network node 100. Fig. 3 shows simulation results of 3GPP based LTE HetNet simulations using corresponding embodiments as depicted in Fig. 2. The data load in terms of system throughput in Megabit per second per square kilometer (Mbps/km²) is shown on the x-axis. The power consumption per area unit is shown on the y-axis. Their evaluations show that cells 200 (in the following indicated as "picos") should be switched on or off at certain system throughputs to minimize the total power consumption. For these simulations, uniform user distributions and a certain number of randomly-dropped picos within the geographical area of the network node 100 were considered as specified. Other simulations show similar results with clustered user distributions. The graph 400 for "macro only" and the graphs 402, 404, 406, 408 and 410 for "macro + N pico" (where N represents different numbers of picos, i.e. 1, 2, 3, 4, and 10 pico cells such as cells 220a and 220b in Fig. 2) intersect at certain system throughputs, which mark the threshold at which it is effective or advantageous to activate or deactivate one more pico. For instance, graph 400 and graph 402 intersect at 123 Mbps/km². Hence, the result of Fig. 3 shows that the power consumption of a macro cellular deployment only scenario (no additional cells 200 are activated) is best for system throughputs up to 123 Mbps/km². It can be beneficial with respect to energy savings to switch on picos at higher system throughputs, i.e. 1 pico at 123 Mbps/km², 2 picos at 172 Mbps/km², 3 picos at 191 Mbps/km², and 4 picos at 251 Mbps/km². Generally, these values may depend on the used power models for macro and pico cells and the user distribution (uniform or clustered), i.e. the amount of transmitted data towards UEs.

System throughputs per area unit can be hard to measure in realistic deployments. Therefore, a better choice would be the control of the average resource usage handled by the scheduler. The average resource usage is the number of used Physical Resource Blocks (PRB) per total number of available resource blocks averaged over a configured period of time. A PRB corresponds to a subgroup of time and frequency resources used in LTE and the data transported in such a PRB further depends on the modulation and coding scheme used within the PRB. For example, in LTE 64 Quadrature Amplitude Modulation (QAM), 16 QAM or Quaternary Phase Shift Keying (QPSK) may be used.

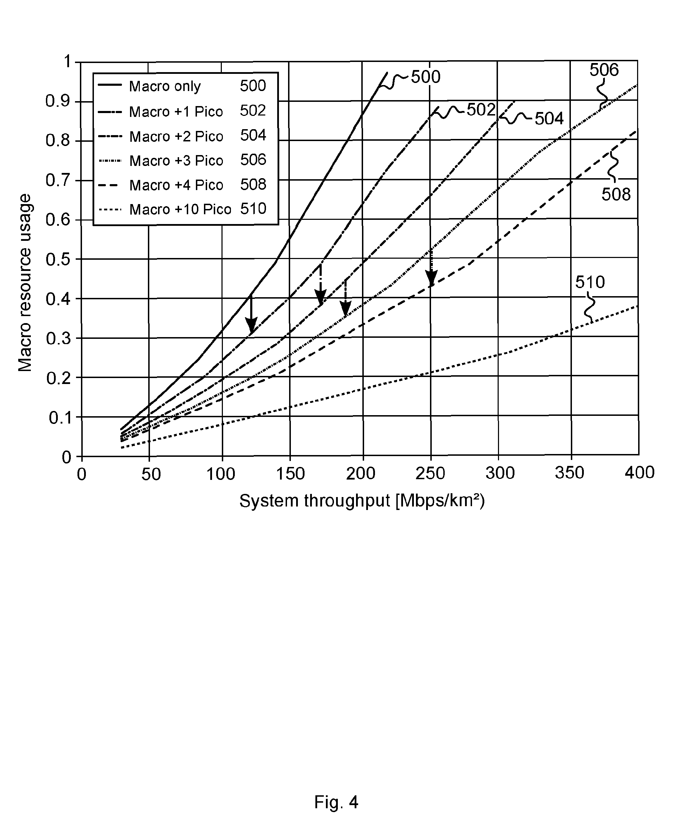

Fig. 4 shows the resource usage in percent of a macro cell 210 as a function of the system throughput. The system throughput in Mbps/km² is shown on the x-axis. A normalized macro resource usage is shown on the y-axis. Arrows indicate at which system throughputs additional pico cells should be switched on in line with Fig. 3. As shown by the view graph 500 the macro resource usage increases up to 40% when the system throughput increases up to 123 Mbps/km² in case only the macro cell 210 is active and all pico cells are inactive. Fig. 4 further shows a view graph 502 for activation of the macro cell 210 and one pico cell, view graph 504 for activation of the macro cell 210 and two pico cells, view graph 506 for activation of the macro cell 210 and three pico cells, view graph 508 for activation of the macro cell 210 and four pico cells, and view graph 510 for activation of the macro cell 210 and ten pico cells.

Considering view graph 500 for activation of the macro cell 210 only it can be seen from Fig. 3 that for higher system throughputs a deployment of a macro cell 210 together with 1 pico can be beneficial with respect to power consumption, although the capacity limit of a macro cell 210 is not reached as shown in Fig. 4. After switching on of a pico cell the traffic load can be shared between the pico cell and the macro cell 210, supposing mobiles 30 are located within the coverage area of this pico. Then, the average resource usage of the macro cell 210 can be decreased to 31%, cf. Fig. 4. With increasing traffic load, also the macro resource usage may increase. As shown in Fig. 4, the macro resource usage increases up to 49% for a system throughput of 172 Mbps/km², which can be used as an indicator that an additional pico should be switched on, cf. Fig. 3.

After switching on this additional pico, the resource usage of the macro cell 210 can be reduced to an average value of 38%. The next pico should be switched on at a macro resource usage of 44%. The macro resource usage can then be decreased to 35% after switching on a third pico within the geographical area of the macro cell 210. The fourth pico may be switched on at a macro resource usage of 49%, which can lead to a reduction of the macro resource usage to 39%. This demonstrates that the average macro resource usage can be a measure to decide on the switching on or off of pico cells in embodiments. At high average macro resource usages, e.g. for more than 45%, it can be beneficial to switch on additional pico cells and at low average macro resource usages, e.g. for less than 35%, it can be better to switch off picos. In other words, the decision to switch on or off a cell 200 can be based on threshold values in system throughput or resource utilization, which themselves can be predetermined.

In the following embodiment the control module 14 is operable to determine a resource usage table based on the information related to the load. The following table shows an example of macro cell only statistics and HetNet scenario statistics (considering N switched on picos) providing per day and period of time (here hour) the average macro resource usage of total available resources in the individual cell 200. The table comprises a column for a scenario using only a macro cell 210 and a column for a scenario combining a macro cell 210 with N pico cells. N can assume any integer number value, and there may be several columns for several scenarios. Each scenario shown in the table comprises resource usage values (labeled "RU_...") for different clock times in hours, also differentiating between weekdays and weekends. The entry "Macro cell (id)" in the upper left corner indicates that the table is valid for one given macro cell 210. The trigger times in the left column are example values, however, they may also comprise e.g. calendar dates, minutes or seconds. These trigger times may be relevant for determining a decision table later on.

| **Macro cell (id)** | **Macro only scenario** | | **HetNet scenario (macro + N pico)** | |
|---|---|---|---|---|
| **trigger time (hour)** | **@ weekday** | **@ weekend** | **@ weekday** | **@ weekend** |
| 0-1 | RU_macro_only_d00 | RU_macro_only_w00 | RU_macro_HetNet_d00 | RU_macro_HetNet_w00 |
| * | * | * | * | * |
| 15-16 | RU_macro_only_d15 | RU_macro_only _w15 | RU_macro_HetNet_d15 | RU_macro_HetNet_w15 |
| 16-17 | RU_macro_only_d16 | RU_macro_only _w16 | RU_macro_HetNet_d16 | RU_macro_HetNet_w16 |
| 17-18 | RU_macro_only_d17 | RU_macro_only _w17 | RU_macro_HetNet_d17 | RU_macro_HetNet_w17 |
| * | * | * | * | * |
| 23-24 | RU_macro_only_d23 | RU_macro_only_w23 | RU_macro_HetNet_d23 | RU_macro_HetNet_w23 |

This can be enhanced by collecting more statistics as function of the number N of switched on pico cells. Similar statistics can also be collected from the individual pico cells. To get more enhanced statistics a learning algorithm may be implemented in embodiments to reflect the traffic behavior in daily or weekly periods, e.g. for macro-only scenarios as well as for HetNet scenarios. The above table presents an example for a macro resource usage statistic. The table can comprise one column for each single cell 200, respectively, as well as columns for combinations of cells 200 (not explicitly shown here). In some embodiments such a table may comprise a column for each combination of the macro cell with any pico cell. The difference between the macro resource usage of the macro-only scenario and the macro resource usage of HetNet scenarios may be used to determine when picos should be switched on for energy saving reasons. One possible implementation to switch on an additional pico could be to determine which pico bears the highest data load in case all picos are activated, in order to address the correct pico with the instructional information for activation.

In this case another table may provide information on resource usages of each pico as function of time, e.g. similar to the table with macro resource usage as shown above. For a decision on switching a pico off the current averaged load of a pico cell can be used to send a message towards the macro base station that this pico is switched off. Furthermore, since mobile devices 30 may transmit and receive signals to and from the strongest base station transceiver available, biasing of the respective measurements can be used in some embodiments to set the coverage area of the respective cells and therewith also influence the traffic share such a cell is able to support. For example, a bias value can be featured as a constant added to the signal strength of a pico cell for instance, which can significantly influence the data load that can be taken over by a pico.

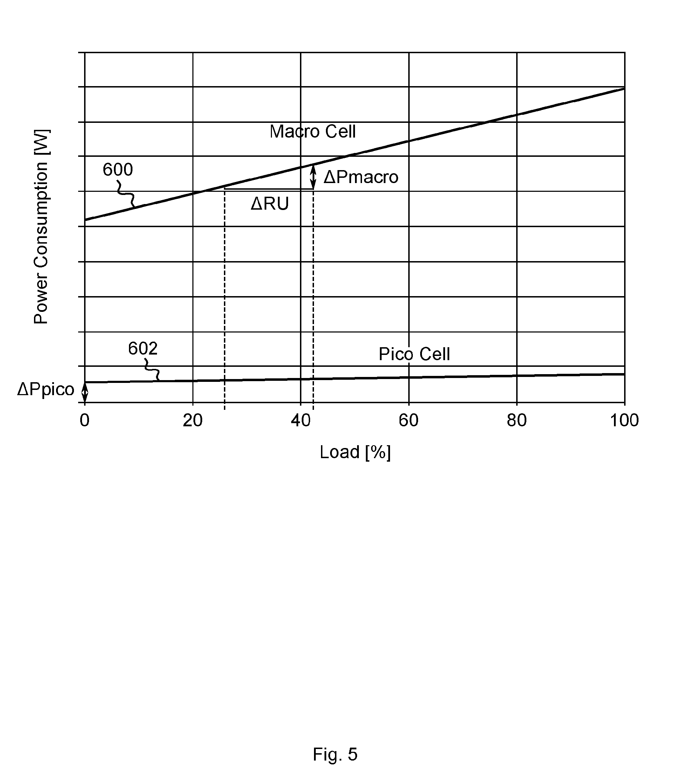

The threshold, be it in terms of a system throughput or in terms of resource utilization, when picos should be switched on can be calculated by considering the power consumption characteristics of macro and pico cells, which is shown in Fig. 5. Hence, in the present embodiment the information related to the load of the cell 200 comprises information related to a power consumption of the cell 200. The load in percent can be seen on the x-axis, whereas the power consumption is shown on the y-axis. Fig. 5 shows a view graph 600 for the macro cell and a view graph 602 for the pico cell. The power consumption is shown as a function of load in percent, which can, for example, be measured in terms of PRB utilization. In this embodiment, simple linear power consumption figures and estimations have been used to demonstrate their impact. The offset of the pico power consumption characteristic ΔP_{pico}, i.e. at load = 0%, and the slope of the macro power consumption characteristic can be used for calculating when a pico cell should be switched on. Only if the reduction of the macro power consumption ΔP_{macro} is higher than ΔP_{pico}, it is beneficial to switch on a pico cell. That is to say that the minimum reduction of resource usage ΔRU of the macro cell can be easily calculated for decisions on switching on and off pico cells. In other words, the power consumption characteristics can be used to calculate the decision points for switching, e.g. in the OAM center 230 (centralized approach) or in the base stations (macro cells 210, decentralized approach).

More precise calculations may be made, which may include the function of the power model (a linear function may not be required) and the estimated required load in the pico cell as well. In the present embodiment the linear power model of the picos may be flat, therefore the slope of the pico power model may have little impact. As mentioned above, the resource usage of picos can be another indicator which pico should be switched on, because the highest resource usage in a single pico can be a measure to decide that this pico may be best to be switched on for energy savings at a given time. This may further depend on the number of users within a pico or the data which could be transmitted by a pico.

In the following embodiment the control module 14 is operable to determine a decision table based on the resource usage table. The decision table of the present embodiment comprises information on when to set the state of one or more small cells or other cells 220 to the active state or the inactive state. In this embodiment the decision table can be based on a resource usage table and/or the resource usage table can be based on the information related to the load of the cell 200. Further, the instructional information related to the state of the cell 200 can be comprised in the decision table in embodiments. The instructional information related to the state of the cell 200 can comprise information on when to set the state of the one or more other cells 220 to the active state or the inactive state, for instance. That is to say in the present embodiment the communication module 24 is further operable to receive instructional information related to a state of the cell 200. The state corresponds to an active state or an inactive state. The instructional information related to the state of the cell 200 is comprised in a decision table. The following table of an example embodiment gives a macro cell 210 decision example of switching picos (or one pico) on and off. The previous and the following table are valid for the same macro cell 210 labeled "Macro cell (id)".

The trigger times in the following table coincide with the trigger times in the previous table; also here the trigger times can comprise other values of time, e.g. calendar dates, minutes or seconds. The column adjacent to the right comprises decisions to switch on given pico cells, and the column next to that comprises decisions to switch off given pico cells. In the rightmost column statuses are shown for four different pico cells after receiving instructional information based on the decision table. The rightmost column itself need not be part of the actual decision table and is shown here for reasons of comprehension. D_ON_id, i.e. Decision ON id, represents the decision to switch on the pico cell number "id", where "id" is the identifier (e.g. number 1, 2, 3, 4) of a pico cell. Also, if more than one pico should be switched on, a combination of pico cells can be switched on based on their identifiers. Also comprised is a macro cell decision example of switching one or more picos off. D_OFF_id (Decision OFF id) represents the decision to switch off the pico cell number "id".

| **Macro cell (id)** | **Decision** | **Decision** | **Pico cell (id)** | | | |
|---|---|---|---|---|---|---|
| **trigger time (hour)** | **Indicator "ON"** | **Indicator "OFF"** | **#1** | **#2** | **#3** | **#4** |
| 0-1 | * | * | * | * | * | * |
| * | * | * | * | * | * | * |
| 15-16 | D_ON_1 | * | ON | * | * | * |
| 16-17 | D_ON_2 | D OFF 1 | OFF | ON | * | * |
| 17-18 | D ON 3 | * | * | * | ON | * |
| * | D_ON_1, D_ON_4 | D_OFF_2, D OFF 3 | ON | OFF | OFF | ON |
| 23-24 | * | D_OFF _1, D_OFF_4 | OFF | * | * | OFF |

A hysteresis value or a timer, which may delay the switching on or off of pico cells, could also be used to avoid ping pong effects, i.e. the frequent switching on and off of pico cells.

For example, if a pico cell is switched on and the average macro resource usage is reduced to 31 % then the pico may not be switched off at an average macro resource usage at 35% as proposed in the embodiment above. In this case the average resource usage should be below a value of (31% - H) with H = Hysteresis. Alternatively or additionally a timer can be used. A similar approach could be used for switching off pico cells. Note that each decision values D_ON_id and D_OFF_id can consider H, whereas H could be one value for all cells or individual values per cell. In addition H may be differentiated between switching on and off pico cells.

The threshold of the average resource usage may be a performance indicator, which could be configured by the OAM in case of centralized decisions for each base station as well as the interval, which could be used for averaging the resource usage, e.g. over 10min, 30min, 60min. It could also be configured that the timer for averaging should be restarted after switching on or off of pico cells. For a decentralized approach this decision may be taken by a macro base station or a macro cell.

To calculate the pico on/off switching priority and sequence, in some embodiments a macro cell or macro base station could build a decision table in the following way: First, resource usage tables for each cell (see above first table) can be collected and built. Then, decision tables (see above second table) can be calculated and built based on the resource usage table, to switch on or off pico cells. The pico on/off switching priority calculation can be based on predefined parameters, e.g. RU switching points, and hysteresis values H calculated from the power characteristics.

The OAM or macro cell or base station may switch pico base stations on or off based on the above second table. For example, in Technical Specification (TS) 36.423, which specifies the X2-Interface for LTE, the base station (eNB) may send messages "ENB CONFIGURATION UPDATE" and "CELL ACTIVATION REQUEST" for switching other cells off or on. Note that the decision tables may reflect the pico cell on/off status of the previous switching period based on the current trigger or decision time. New switching points may be learned by considering the reduction of resource usage in the macro cell or macro base station. If the reduction is higher than expected, the activation of a particular pico cell may be executed earlier. If the reduction is lower than expected, the activation may be delayed in order to achieve the desired power consumption.

A possibility for the exchange of resource usage values in some embodiments is that these values are periodically transmitted to the node where the decision is taken. Or it may be event triggered, i.e. a message is sent only when the preconfigured threshold of the resource usage is met. Or it may be exchanged on the request, which may e.g. be initiated by the data module or decision unit. This could be the case, before a macro cell becomes overloaded and an immediate decision may be required, which pico(s) should be switched on.

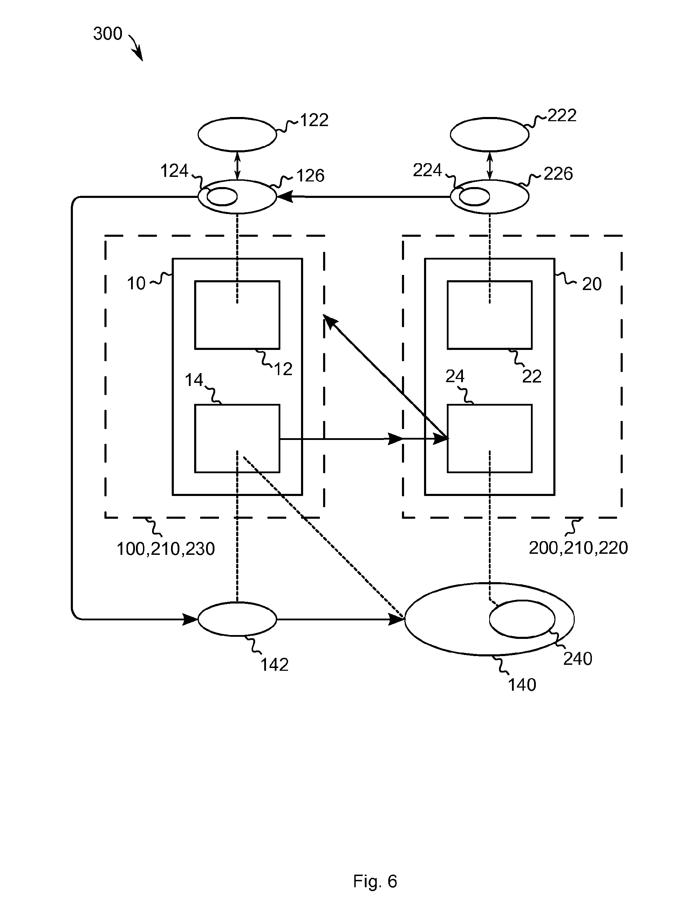

Fig. 6 illustrates further embodiments. Information 126 related to a load 122 of the cell (e.g. the macro cell 210) or the one or more other cells 220 can, additionally or alternatively, comprise information 124 related to a power consumption of the macro cell 210 or the one or more other cells 220. Also, the communication module 24 can be operable to receive instructional information 240 related to a state of the cell 200, wherein the state corresponds to an active state or an inactive state. Furthermore, the information 226 related to the load 222 of the cell 200 can comprise information 224 related to a power consumption of the cell 200. The communication module 24 can finally be operable to provide the information 226 related to the load 222 of the cell 200 to a network node 100 based on an event or periodically or based on a request from the network node 100.

Fig. 6 shows a detailed embodiment of the network node apparatuses 10 and the cell apparatus 20 for a mobile communication system 300. The apparatus 10 comprises the data module 12 and the control module 14. The apparatus 20 comprises the load module 22 and the communication module 24. The control module 14 can control a state of at least one of the one or more other cells 220 (or cells 200, or macro cells 210), which is indicated by a long arrow. A small adjacent arrow indicates that the communication module 24 can receive instructional information 240 related to a state of the cell 200 from the control module 14. The load module 22 can be operable to determine information 226 related to a load 222 of the cell 200, where the information 226 related to the load 222 can comprise further information 224 related to a power consumption.

The communication module 24 can further be operable to provide the information 226 related to the load 222 of the cell 200 to the network node 100 (or macro cell 210, or OAM center 230). The data module 12 is operable to determine information 126 related to a load 122 of the macro cell 210 or the one or more other cells 220. An arrow pointing from the information 226 related to a load 222 to the information 126 related to a load 122 indicates how the information 126 related to a load 122 is determined. The data module 12 can determine information 126 related to a load 122 from one or several cells 200. In other words, the information 226 determined by the load module 22 can become the information 126 determined by the data module 12, or part of the same. Based on the information 126 related to the load 122, the control module 14 can be operable to determine a resource usage table 142, which is indicated by a long arrow pointing from the information 126 to the resource usage table 142. In other words, knowledge of information 126 can be used to build the resource usage table 142.

The control module 14 is operable to determine a decision table 140 based on the resource usage table 142. The circle indicating the decision table 140 comprises another circle indicating instructional information 240 on when to set the state of the one or more other cells 220 to the active state or the inactive state. The communication module 24 can then receive the instructional information 240 related to a state of the cell 200 (or the other cell 220). In order to activate the correct cell 200 for instance, a drop-off in macro cell power consumption by e.g. 10 % could be registered by the data module 12. The decision table 140 can also be based on trigger values; e.g. an additional cell can be activated the moment a threshold in data load is exceeded.

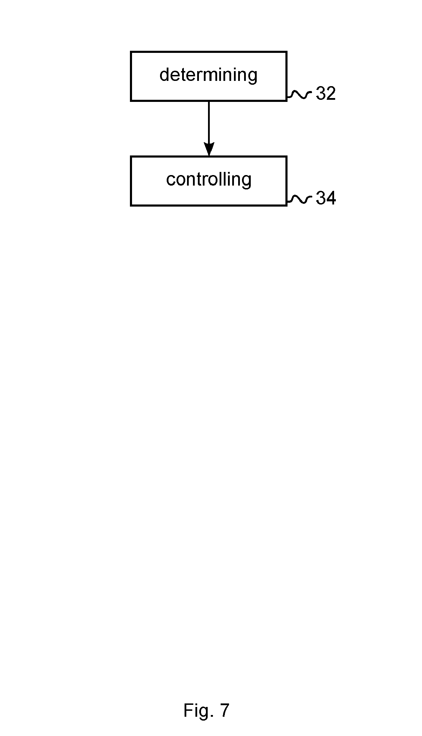

Fig. 7 illustrates a block diagram of an embodiment of a method for a mobile communication system 300 in two steps. The first step comprises determining 32 information 126 related to a load 122 of the macro cell 210 or the one or more other cells 220. The second step comprises controlling 34 a state of at least one of the one or more other cells 220 based on the information 126 related to the load 122, wherein the state corresponds to an active state or an inactive state.

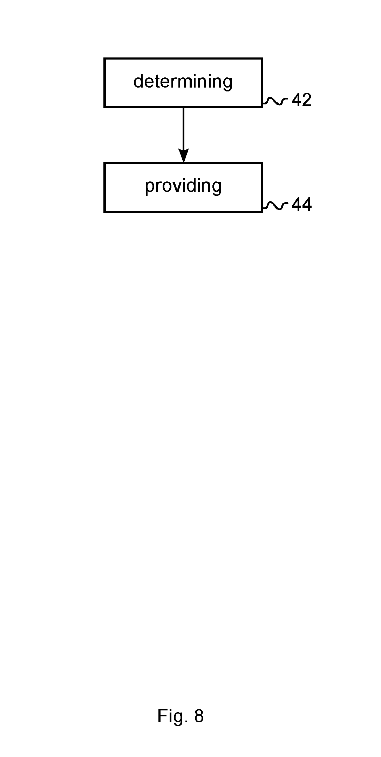

Fig. 8 illustrates another block diagram of an embodiment of a method for a mobile communication system 300. Again, the method comprises two steps. The first is a step of determining 42 information 226 related to a load 222 of the cell 200. The second is a step of providing 44 the information 226 related to the load 222 of the cell 200 to a network node 100.

Embodiments further provide a computer program having a program code for performing one of the above methods, when the computer program is executed on a computer, processor or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks labeled as "means", "means for determining", "means for controlling", etc., may be provided through the use of dedicated hardware, such as " a determiner", "a controller", "a processor", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (10) for a network node (100) for a mobile communication system (300), the mobile communication system (300) comprises at least one cell (210) having a coverage area which at least partly surrounds one or more other cells (220), the apparatus (10) comprising
a data module (12) operable to determine information (126) related to a load (122) of the cell (210) or the one or more other cells (220); and
a control module (14) operable to control a state of at least one of the one or more other cells (220) based on the information (126) related to the load (122), wherein the state corresponds to an active state or an inactive state.

2. The apparatus (10) of claim 1, wherein the information (126) related to the load (122) of the cell (210) or the one or more other cells (220) comprises information (124) related to a power consumption of the cell (210) or the one or more other cells (220), and/or wherein the data module (12) is operable to receive the information (126) related to the load periodically, triggered by an event, or based on a request from the network node (100).

3. The apparatus (10) of claim 1, wherein the control module (14) is operable to determine a resource usage table (142) based on the information (126) related to the load.

4. The apparatus of claim 3, wherein the control module (14) is operable to determine a decision table (140) based on the resource usage table (142), wherein the decision table (140) comprises information (240) on when to set the state of the one or more other cells (220) to the active state or the inactive state.

5. The apparatus (10) of claim 1, wherein the network node (100) corresponds to an Operation, Administration and Maintenance - OAM - center (230), a cell or a base station transceiver (210).

6. An apparatus (20) for a cell (200) for a mobile communication system (300), the mobile communication system (300) comprises at least one cell (210) having a coverage area which at least partly surrounds one or more other cells (220), the apparatus (20) comprising
a load module (22) operable to determine information (226) related to a load (222) of the cell (200); and
a communication module (24) operable to provide the information (226) related to the load (222) of the cell (200) to a network node (100).

7. The apparatus (20) of claim 6, wherein the communication module (24) is further operable to receive instructional information (240) related to a state of the cell (200), wherein the state corresponds to an active state or an inactive state.

8. The apparatus (20) of claim 6, wherein the cell (200) corresponds to a cell (210) or another cell (220).

9. The apparatus of claim 6, wherein the information (226) related to the load (222) of the cell (200) comprises information (224) related to a power consumption of the cell (200).

10. The apparatus of claim 6, wherein the instructional information (240) related to the state of the cell (200) is comprised in a decision table (140).

11. The apparatus of claim 10, wherein the decision table (140) is based on a resource usage table (142), and/or wherein the resource usage table (142) is based on the information (226) related to the load (222) of the cell (200).

12. The apparatus of claim 6, wherein the communication module (24) is operable to provide the information (226) related to the load (222) of the cell (200) to a network node (100) based on an event or periodically or based on a request from the network node (100).

13. A method for a network node (100) for a mobile communication system (300), the mobile communication system (300) comprises at least one cell (210) having a coverage area which at least partly surrounds one or more other cells (220), the method comprising
determining (32) information (126) related to a load (122) of the cell (210) or the one or more other cells (220); and
controlling (34) a state of at least one of the one or more other cells (220) based on the information (126) related to the load (122), wherein the state corresponds to an active state or an inactive state.

14. A method for a cell (200) for a mobile communication system (300), the mobile communication system (300) comprises at least one cell (210) having a coverage area which at least partly surrounds one or more other cells (220), the method comprising
determining (42) information (226) related to a load (222) of the cell (200); and
providing (44) the information (226) related to the load (222) of the cell (200) to a network node (100).

15. A computer program having a program code for performing one of the methods of claims 13 or 14, when the computer program is executed on a computer, processor or software executable hardware.

## Amended claims

### Amended claims in accordance with Rule 137(2) EPC.

**1.** An apparatus (10) for a network node (100) for a mobile communication system (300), the mobile communication system (300) comprises at least one cell (210) having a coverage area which at least partly surrounds one or more other cells (220), the apparatus (10) comprising
a data module (12) operable to determine information (126) related to a load (122) of the cell (210) or the one or more other cells (220); and
a control module (14) operable to control a state of at least one of the one or more other cells (220) based on the information (126) related to the load (122) and based on a power consumption of the mobile communication system (300), wherein the state corresponds to an active state or an inactive state.

**2.** The apparatus (10) of claim 1, wherein the information (126) related to the load (122) of the cell (210) or the one or more other cells (220) comprises information (124) related to a power consumption of the cell (210) or the one or more other cells (220), and/or wherein the data module (12) is operable to receive the information (126) related to the load periodically, triggered by an event, or based on a request from the network node (100).

**3.** The apparatus (10) of claim 1, wherein the control module (14) is operable to determine a resource usage table (142) based on the information (126) related to the load.

**4.** The apparatus of claim 3, wherein the control module (14) is operable to determine a decision table (140) based on the resource usage table (142), wherein the decision table (140) comprises information (240) on when to set the state of the one or more other cells (220) to the active state or the inactive state.

**5.** The apparatus (10) of claim 1, wherein the network node (100) corresponds to an Operation, Administration and Maintenance - OAM - center (230), a cell or a base station transceiver (210).

**6.** The apparatus (10) of claim 1, wherein the at least one cell (210) and the one or more other cells (220) form a coverage area of the communication system (300), wherein the control module (14) is operable to control the state based on a power consumption in the coverage area.

**7.** The apparatus (10) of claim 1, wherein the at least one cell (210) corresponds to a macro cell, and wherein the one or more other cells (220) correspond to one or more pico cells, wherein the control module (14) operable to control the state of the one or more pico cells based on a power consumption of the macro cell and the one or more pico cells.

**8.** The apparatus (10) of claim 1, wherein the information (126) related to the load (122) is measured in terms of physical resource block utilization.

**9.** A method for a network node (100) for a mobile communication system (300), the mobile communication system (300) comprises at least one cell (210) having a coverage area which at least partly surrounds one or more other cells (220), the method comprising
determining (32) information (126) related to a load (122) of the cell (210) or the one or more other cells (220); and
controlling (34) a state of at least one of the one or more other cells (220) based on the information (126) related to the load (122) and based on a power consumption of the mobile communication system (300), wherein the state corresponds to an active state or an inactive state.

**10.** A computer program having a program code for performing the method of claim 9, when the computer program is executed on a computer, processor or software executable hardware.
